# EUROPÄISCHE PATENTANMELDUNG

(11) **EP 4 786 092 A2**
(43) Veröffentlichungstag der Anmeldung: **05.08.2026**
(21) Anmeldenummer: 26155381.2
(22) Anmeldetag: 30.01.2026
(51) Int. Cl.: B23Q 11/08, F16B 5/00

(54) **SCHUTZABDECKUNG, VERBINDUNGSELEMENT UND MONTAGEWERKZEUG**

(30) Priorität: 03.02.2025 DE 102025103893
(71) Anmelder: MöllerWerke GmbH, 33649 Bielefeld (DE)
(72) Erfinder: Götzmann, Tim, 33647 Bielefeld (DE)
(74) Vertreter: Witte, Weller & Partner Patentanwälte mbB

(57) **Zusammenfassung**

Eine längenveränderliche Schutzabdeckung (12, 14) weist eine Mehrzahl von miteinander gekoppelten Abschirmelementen (28, 30; 40, 42) auf, die relativ zueinander beweglich sind und jeweils einen Abdeckschenkel (52) und einen gegenüber dem Abdeckschenkel (52) abgewinkelten Betätigungsschenkel (54) aufweisen. Die Betätigungsschenkel (54) benachbarter Abschirmelemente (28, 30; 40, 42) sind durch zumindest ein verformbares Verbindungselement (60, 62) zumindest abschnittsweise miteinander gekoppelt. Zumindest einer der Betätigungsschenkel (54) ist zwischen zwei Verbindungselementen (60, 62) angeordnet, die auf voreinander abgewandten Seiten an den Betätigungsschenkel (54) ankoppeln. Ein erstes der beiden Verbindungselemente (60, 62) weist einen Befestigungsvorsprung (82) auf, der eine Öffnung (130) im Betätigungsschenkel (54) und eine Befestigungsaussparung (84) des zweiten der beiden Verbindungselemente (60, 62) zu Befestigungszwecken durchragt. Ein Verbindungselement (60, 62) dient zur Verbindung benachbarter Abschirmelemente (28, 30; 40, 42) einer längenveränderlichen Schutzabdeckung (12, 14). Ein Montagewerkzeug (140) dient zur Montage zumindest zweier Verbindungselemente (60, 62) zur Verbindung benachbarter Abschirmelemente (28, 30; 40, 42) einer Schutzabdeckung (12, 14).

## Beschreibung

Die vorliegende Offenbarung bezieht sich auf eine Schutzabdeckung mit einer Mehrzahl von miteinander gekoppelten Abschirmelementen, die jeweils einen Abdeckschenkel und einen gegenüber dem Abdeckschenkel abgewinkelten Betätigungsschenkel aufweisen, wobei benachbarte Betätigungsschenkel durch zumindest ein verformbares Verbindungselement miteinander gekoppelt sind. Die Offenbarung bezieht sich ferner auf ein Verbindungselement zur Kopplung der Betätigungsschenkel benachbarter Abschirmelemente für eine Schutzabdeckung. Schließlich bezieht sich die Offenbarung auf ein Montagewerkzeug zur Montage zweier benachbarter Verbindungselemente unter Zwischenschaltung eines Betätigungsschenkels eines Abschirmelements.

Aus der EP 4 140 642 A1 ist eine Schutzabdeckung bekannt, die aus mehreren im Wesentlichen L-förmigen Abschirmelementen gebildet ist, die über Verbinder miteinander verbunden sind, um eine flexible und längenveränderliche Abschirmfläche zu bilden. Die EP 4 140 642 A1 bezieht sich auf spezielle Ausgestaltungen solcher Verbinder.

Aus der DE 10 2005 043 604 A1 ist eine Schutzabdeckung für Maschinen bekannt, die aus mehreren Rahmenelementen gebildet ist, die über Verbinder miteinander verbunden sind, um eine flexible und längenveränderliche Abschirmfläche zu bilden. Die Verbinder zwischen den Rahmenelementen sollen eine kontrollierte Bewegung der Abdeckung ermöglichen. Die EP 4 046 747 A2 bezieht auf eine ähnliche Anordnung einer Schutzabdeckung mit mehreren L-förmigen Abschirmelementen, die sich überlappen und über Verbinder miteinander gekoppelt sind, wobei die Verbinder Filmscharniere aufweisen, die die Verformbarkeit der Verbinder und damit die Bewegung der Schutzabdeckung gewährleisten.

DE 20 2022 102 945 U1 offenbart eine Schutzabdeckung für eine Maschine, umfassend eine Vielzahl an Abschirmelementen und diese relativ zueinander beweglich miteinander verkettende Verbinder. Jeder Verbinder ist als jeweils separates Bauteil ausgebildet und besitzt wenigstens zwei bewegliche Arme, welche an einem Mittelsteg angelenkt sind. DE 10 2006 018 452 A1 offenbart ein elastisches Koppelelement für die Verbindung benachbarter Schutzabdeckungssegmente, wie etwa Abdecklamellen oder Halterahmen von Faltenbälgen. Das Koppelelement umfasst zwei Verbindungsseiten, die über mindestens einen Verbindungsschenkel verbunden sind, sodass das Koppelelement in einer Bewegung eine federnde Eigenschaft aufweist. Das Element ermöglicht eine Montage mittels Einrastmechanismen (z. B. Rastnasen) und kann eine Gleitbefestigung (bzw. Gleitverbindung) beinhalten, um einen Längenausgleich (bzw. Längenänderungen) zu kompensieren.

Schutzabdeckungen werden in Maschinen, insbesondere Werkzeugmaschinen, und anderen technischen Einrichtungen verwendet, um Bereiche definiert und hinreichend dicht voneinander zu trennen. Dies betrifft beispielsweise bei Werkzeugmaschinen einen Arbeitsraum, in dem die eigentliche Bearbeitung stattfindet, und einen Rückraum, der Komponenten wie Führungen, Verfahrantriebe, Hilfsaggregate und Ähnliches beherbergt.

Die Abschirmelemente von Schutzabdeckungen können allgemein auch als Lamellen oder Schuppen bezeichnet werden. Die Abschirmelemente bestehen üblicherweise aus Edelstahl, (gegebenenfalls rostfreiem) Federstahl oder vergleichbaren Metallwerkstoffen. Es sind Gestaltungen von Schutzabdeckungen bekannt, bei denen solche Abschirmelemente mit einem Faltenbalg kombiniert werden. Ferner gibt es sogenannte faltenbalglose Schutzabdeckungen, bei denen die Abschirmelemente einander hinreichend dicht kontaktieren. Auf diese Weise kann je nach Auslegung eine zumindest hinreichende Abdichtung gegen einen Durchtritt von Medien (beispielhaft Kühlschmiermittel), Spänen, Abrieb und dergleichen gewährleistet werden. Unterschiedliche Anwendungen können unterschiedliche Anforderungen an die Dichtheit mit sich bringen.

Die Abschirmelemente sind üblicherweise in einer Reihe angeordnet und relativ zueinander definiert verfahrbar, sodass die Schutzabdeckung insgesamt beweglich ist. Auf diese Weise können Spindeln, Roboter, Werkzeugtische und vergleichbare Komponenten in Maschinen in zumindest einer Achse verfahren werden. Die Schutzabdeckung kann sich an die Verfahrbewegungen anpassen, die Dichtheit wird unabhängig von der jeweiligen Position der verfahrbaren Komponente gewährleistet. Auf diese Weise können längenveränderliche Schutzabdeckungen realisiert werden. Je nach Konfiguration lassen sich Baugruppen aus Schutzabdeckungen realisieren, die für Verfahrbewegungen einer Komponente, die die Abschirmfläche durchragt, in einer, zwei oder gar drei Achsen ausgebildet sind. Dies ist nicht einschränkend zu verstehen.

Eine weitere Anforderung an Schutzabdeckungen ist die Bereitstellung eines maximal möglichen Verfahrweges bei einem minimalen Blockmaß (kleinste Abmessung bei hoher Packungsdichte der Abschirmelemente). Auf diese Weise kann beispielsweise bei Werkzeugmaschinen der gegebene Bauraum maximal ausgenutzt werden.

Benachbarte Abschirmelemente sind regelmäßig durch sogenannte Verbindungselemente (üblicherweise aus Kunststoff) miteinander gekoppelt, sodass quer zur Verfahrrichtung der Abschirmelemente eine Stabilisierung (in einer oder zwei weiteren Raumrichtungen) gegeben ist. Die Verbindungselemente können gegebenenfalls Bewegungen zwischen benachbarten Abschirmelementen übertragen. Zumindest einige der Verbindungselemente können zur Wegbegrenzung dienen, um den Maximalabstand zwischen benachbarten Abschirmelementen zu definieren.

Es hat sich gezeigt, dass die Montage der Verbindungselemente mit einem gewissen Aufwand verbunden ist. Üblicherweise ist eine Mehrzahl oder Vielzahl von Verbindungselementen (gegebenenfalls unterschiedliche Arten von Verbindungselementen) erforderlich, um eine Schutzabdeckung oder sogar eine Schutzbaugruppe mit einer Mehrzahl von Schutzabdeckungen zu bilden.

Häufig erfolgt die Montage der Verbindungselemente an den Abschirmelementen durch Nieten oder vergleichbare Verfahren. Auf diese Weise können zwei benachbarte Verbindungselemente unter Zwischenschaltung eines Abschirmelements miteinander verbunden werden. Zur flächigen Ankopplung und für eine günstige Krafteinleitung werden pro Verbindungselement regelmäßig mehrere Niete gesetzt, entsprechend erhöht sich der Aufwand. Die Anzahl der erforderlichen Niete kann bei einer Schutzabdeckung durchaus vierstellig sein.

Das Setzen der Niete setzt eine gewisse Erfahrung und Expertise beim Werker voraus. Im Falle von Fehlern sind Korrekturen und Reparaturen nur mit sehr hohem Aufwand möglich. Generell muss bei der Gestaltung und Montage der Verbindungselemente darauf geachtet werden, dass das Blockmaß nicht beeinträchtigt wird.

Vor diesem Hintergrund liegt der vorliegenden Offenbarung die Aufgabe zugrunde, eine längenveränderliche Schutzabdeckung mit einer Mehrzahl von miteinander gekoppelten Abschirmelementen anzugeben, die über Verbindungselemente miteinander gekoppelt sind, wobei die Verbindungselemente einfach montierbar sind. Die Montage der Verbindungselemente soll eine dauerhafte und belastbare Ankopplung ermöglichen. Die Montagelösung soll eine vergleichsweise einfache Demontage für Reparaturzwecke erlauben. Der Platzbedarf, insbesondere das minimale Blockmaß, soll sich hierbei nicht oder nur unwesentlich erhöhen. Ferner soll sich das dynamische Verhalten der Schutzabdeckung möglichst nicht oder nur unwesentlich verändern.

Gemäß einem ersten Aspekt bezieht sich die vorliegende Offenbarung auf eine längenveränderliche Schutzabdeckung, die Folgendes aufweist:
- eine Mehrzahl von miteinander gekoppelten Abschirmelementen, die relativ zueinander beweglich sind und jeweils einen Abdeckschenkel und einen gegenüber dem Abdeckschenkel abgewinkelten Betätigungsschenkel aufweisen,
   wobei die Betätigungsschenkel benachbarter Abschirmelemente durch zumindest ein verformbares Verbindungselement zumindest abschnittsweise miteinander gekoppelt sind,
   wobei zumindest einer der Betätigungsschenkel zwischen zwei Verbindungselementen angeordnet ist, die auf voreinander abgewandten Seiten an den Betätigungsschenkel ankoppeln, und
   wobei ein erstes der beiden Verbindungselemente einen Befestigungsvorsprung aufweist, der eine Öffnung im Betätigungsschenkel und eine Befestigungsaussparung des zweiten der beiden Verbindungselemente zu Befestigungszwecken durchragt.

Die der Offenbarung zugrunde liegende Aufgabe wird auf diese Weise gelöst.

Offenbarungsgemäß können nämlich zwei benachbarte Verbindungselemente unter Zwischenschaltung eines Betätigungsschenkels montiert werden, indem einer oder mehrere Befestigungsvorsprünge des einen Verbindungselements sowohl den Betätigungsschenkel als auch eine Befestigungsaussparung des gegenüberliegenden Verbindungselements durchragt, um dort gesichert zu werden.

Auf diese Weise ist der Betätigungsschenkel des Abschirmelements Sandwich-artig zwischen zwei benachbarten Verbindungselementen angeordnet. Ein Verbindungselement erstreckt sich jeweils zwischen zwei benachbarten Betätigungsschenkeln. Auf diese Weise kann sich eine zumindest teilweise formschlüssige Verschachtelung ergeben, ohne dass es einer Nietverbindung bedarf, die den Betätigungsschenkel durchragt. Es ist also kein Niet erforderlich, der das erste Verbindungselement, den Betätigungsschenkel und das zweite Verbindungselement durchragt und diese Verbindung formschlüssig sichert. Stattdessen durchragt zumindest ein Befestigungsvorsprung, der am ersten Verbindungselement ausgebildet ist, den Betätigungsschenkel und das zweite Verbindungselement.

In den Betätigungsschenkel können eine oder mehrere Öffnungen eingebracht werden, durch die sich im montierten Zustand der Befestigungsvorsprung erstreckt. Die Öffnung können beispielsweise mittels Laserschneiden, Stanzen oder durch vergleichbare Verfahren erzeugt werden. In beispielhaften Ausgestaltungen sind die Öffnungen unrund gestaltet, also beispielsweise als rechteckige oder quadratische Öffnungen.

In beispielhaften Ausgestaltungen sind die Verbindungselemente (zumindest eines Typs von Verbindungselementen) einheitlich gestaltet. Dies kann beispielsweise dergestalt vonstattengehen, dass die Verbindungselemente sowohl Befestigungsvorsprünge als auch Befestigungsaussparung aufweisen, um mit korrespondierenden Verbindungselementen gekoppelt zu werden, die ebenso derartige Gestaltelemente (Befestigungsvorsprünge und Befestigungsaussparungen) aufweisen. Auf diese Weise kann eine Kette gebildet werden, wobei jeweils einen Abdeckschenkel zwischen zwei Verbindungselementen angeordnet ist.

Bei den verschiedenen Typen von Verbindungselementen handelt es sich beispielsweise um sogenannte Querstabilisatoren (wirksam quer zur Abschirmfläche und quer zur Verfahrrichtung beim Öffnen und Schließen der Schutzabdeckung) oder um sogenannte Längsstabilisatoren (wirksam längs zur Abschirmfläche und quer zur Verfahrrichtung beim Öffnen und Schließen der Schutzabdeckung).

In beispielhaften Ausgestaltungen sind die Verbindungselemente als Kunststoff-Spritzgussteil gestaltet. Auf diese Weise ergeben sich insbesondere bei der Ausbildung der Befestigungsvorsprünge und der Befestigungsaussparungen gestalterische Freiheiten. Die Verbindungselemente sind üblicherweise als flache Bauteile gestaltet, die jedoch in einem teilweise verformten, gefalteten Zustand verbaut werden. Bei der Fertigung mittels Spritzguss können die Befestigungsvorsprünge prominent gegenüber einer flachen Grundform hervorstehen.

In beispielhaften Ausgestaltungen handelt es sich bei der Schutzabdeckung um eine faltenbalglose Schutzabdeckung. Bei einer faltenbalglosen Schutzabdeckung liegen die Abschirmelemente mit ihren Abdeckschenkeln hinreichend dicht aneinander, sodass Verschmutzungen und dergleichen die auf diese Weise gebildete Abschirmfläche nicht (oder nur innerhalb definierter Grenzen) passieren können.

Die Abschirmelemente der Schutzabdeckung sind unter Wahrung einer Überdeckung zwischen benachbarten Abdeckschenkeln aneinandergereiht. Auf diese Weise wird eine geschlossene und hinreichend dichte Abschirmfläche bereitgestellt. Mehrere Schutzabdeckungen können eine Öffnung (für ein Maschinenteil oder dergleichen) umgeben.

Die Schutzabdeckung kann eine Mehrzahl oder Vielzahl von Abschirmelementen aufweisen, die aneinandergereiht sind. Benachbarte Abschirmelemente können über benachbarte Verbindungselemente miteinander gekoppelt werden, sodass sich insgesamt eine geschachtelte Gestaltung aus Abschirmelementen (mit Betätigungsschenkel) und Verbindungselementen ergibt. Beispielsweise im Randbereich (erstes oder letztes Abschirmelement einer Reihe) können grundsätzlich auch andere Verbindungselemente verbaut sein, um die Abschirmelemente mit Endflanschen oder dergleichen zu koppeln.

In beispielhaften Ausgestaltungen sind die Abschirmelemente zwischen einer eingefahrenen Stellung, in der benachbarte Betätigungsschenkel aneinander angenähert sind, und einer ausgefahrenen Stellung verfahrbar, in der die benachbarten Betätigungsschenkel voneinander beabstandet sind. Auf diese Weise kann die Schutzabdeckung zwischen dem Blockmaß (kleinste Länge) und seiner maximalen Auszugslänge bewegt werden.

Gemäß einer beispielhaften Ausgestaltung weist der Befestigungsvorsprung zumindest eine Rastnase auf, die den Befestigungsvorsprung in der Befestigungsaussparung sichert. Auf diese Weise kann der Befestigungsvorsprung unter Zwischenschaltung eines Betätigungsschenkels eine Befestigungsaussparung durchdringen und in dieser (montierten) Position gesichert werden.

Die Lagesicherung mit der zumindest einen Rastnase kann als Montagehilfe und temporäre Lagesicherung dienen, bis eine dauerhafte Lagesicherung durch ein Halteelement erfolgt. Es ist grundsätzlich auch vorstellbar, benachbarte Verbindungselemente unter Zwischenschaltung eines Betätigungsschenkels unter Nutzung der zumindest einen Rastnase dauerhaft miteinander zu koppeln.

Gemäß einer weiteren beispielhaften Ausgestaltung ist der Befestigungsvorsprung als Bogen oder Spitzbogen gestaltet, unter dem ein Halteelement durchführbar ist. Gemäß dieser Ausgestaltung kann eine Lagesicherung durch ein separates Halteelement erfolgen, das unterhalb des Bogens und oberhalb der Befestigungsaussparung parallel zum Betätigungsschenkel montiert wird. Auf diese Weise kann der Befestigungsvorsprung an einer Demontagebewegung durch die Befestigungsaussparung (entgegengesetzt zur Montagerichtung) gehindert werden.

Der Befestigungsvorsprung bildet beispielsweise eine Befestigungslasche oder eine Befestigungsöse aus, die für die Lagesicherung verwendbar ist. Der als Bogen gestaltete Befestigungsvorsprung weist beispielsweise einen Querschnitt in Form eines umgedrehten U oder eines umgedrehten V auf, wobei dessen Schenkel an das Verbindungselement ankoppeln und dessen Spitze oder Scheitel die Befestigungsaussparung des benachbarten Verbindungselements durchdringt.

Gemäß einer weiteren beispielhaften Ausgestaltung ist unterhalb des Befestigungsvorsprungs eine Eintauchöffnung gebildet, in die ein Befestigungsvorsprung eines benachbarten Verbindungselements in einem Blockzustand der Schutzabdeckung zumindest teilweise eindringt.

Mit anderen Worten können also benachbarte Betätigungsschenkel im Blockzustand (im Blockmaß) besonders nahe aneinander heranfahren, weil die Befestigungsvorsprünge benachbarter Verbindungselemente teilweise ineinander einrücken können. Mit anderen Worten, eine Bogenspitze (oder ein Bogenscheitel) kann von unten in eine Bogenöffnung eines benachbarten Verbindungselements einrücken. Auf diese Weise können die Befestigungsvorsprünge beträchtlich über die flache (plattenartige) Grundstruktur der Verbindungselemente hinausragen, ohne dass sich dies nachteilig auf das Blockmaß auswirkt.

Die Befestigungsvorsprünge benachbarter Verbindungselemente können miteinander verschachtelt sein. Mit anderen Worten können also die Öffnungen benachbarter Betätigungsschenkel, durch die sich die Befestigungsvorsprünge erstrecken, miteinander fluchten, benachbarte Abschirmelemente können also identisch gestaltet sein. Dadurch verringert sich der Hersteller- und Montageaufwand weiter.

Gemäß einer weiteren beispielhaften Ausgestaltung weist das erste Verbindungselement eine Mehrzahl von Befestigungsvorsprüngen auf, die in einer Reihe angeordnet sind, wobei das zweite Verbindungselement eine Mehrzahl von Befestigungsaussparungen aufweist, die in einer Reihe angeordnet sind, und wobei die Befestigungsvorsprünge den Betätigungsschenkel und die Befestigungsaussparungen durchragen.

Auf diese Weise kann eine sichere und dauerhafte Verbindung mit günstiger Krafteinleitung erzeugt werden, gegebenenfalls unter Hinzuziehung eines Halteelements, das die Verbindung sichert. Die Verbindungselemente können den dazwischen liegenden Betätigungsschenkel großflächig kontaktieren.

Gemäß einer weiteren beispielhaften Ausgestaltung weist der Betätigungsschenkel eine Mehrzahl von Öffnungen auf, die an die Anzahl der Befestigungsvorsprünge und der Befestigungsaussparungen angepasst ist. Es müssen nicht notwendigerweise sämtliche der Elemente gleichzeitig genutzt werden, um eine Ankopplung herbeizuführen. Auf diese Weise erhöht sich die Flexibilität.

Gemäß einer weiteren beispielhaften Ausgestaltung ist zwischen zwei oder mehr benachbarten Befestigungsaussparungen des zweiten Verbindungselements eine Führungsnut für ein Halteelement gebildet. Mit anderen Worten kann das zweite Verbindungselement im Umfeld der Befestigungsaussparungen einen Sitz für ein zur Lagesicherung dienendes Halteelement bereitstellen. Das Halteelement kann in die Führungsnut definiert eingelegt oder eingeschoben werden. Das Halteelement kann auf diese Weise genau positioniert und in seiner Soll-Position gesichert werden.

Gemäß einer weiteren beispielhaften Ausgestaltung weist die Befestigungsaussparung des zweiten Verbindungselements geneigte Seitenflächen auf, die an den Befestigungsvorsprung des ersten Verbindungselements angepasst sind.

Dies bezieht sich insbesondere auf diejenigen Seitenflächen, die im montierten Zustand vom Befestigungsvorsprung kontaktiert werden. Wenn der Befestigungsvorsprung geneigte Seitenwände aufweist und die Befestigungsaussparung mit korrespondierenden geneigten Seitenflächen versehen ist, ergibt sich ein günstiger Flächenkontakt zwischen dem Befestigungsvorsprung und der Befestigungsaussparung. Ferner lassen sich die Bauteile montagefreundlicher ineinanderschieben, da beim Einführen zunächst viel Spiel vorhanden ist. Mit dem Fortschreiten des Einschiebens reduziert sich das Spiel immer weiter und die Bauteile zentrieren sich zusätzlich.

Gemäß einer weiteren beispielhaften Ausgestaltung weisen die Verbindungselemente zwei Befestigungsabschnitte und zwei Verbindungsschenkel auf, die sich zwischen den Befestigungsabschnitten erstrecken, wobei ein erster Befestigungsabschnitt einen oder mehrere Befestigungsvorsprünge aufweist, und wobei ein zweiter Befestigungsabschnitt eine oder mehrere Befestigungsaussparungen aufweist.

Auf diese Weise können die Verbindungselemente mit den Befestigungsabschnitten flächig am Betätigungsschenkel anliegen. Die Befestigungsabschnitte können auch als Befestigungsstege bezeichnet werden.

Die Verbindungselemente können sowohl als erstes Verbindungselements als auch als zweites Verbindungselement dienen. Auf diese Weise können mehrere gleichartige Verbindungselemente miteinander verschachtelt oder verkettet werden, um eine Mehrzahl von Abschirmelementen miteinander zu koppeln.

Gemäß einer beispielhaften Ausgestaltung sind am ersten Befestigungsabschnitt ausschließlich Befestigungsvorsprünge ausgebildet, wobei am zweiten Befestigungsabschnitt ausschließlich Befestigungsaussparungen ausgebildet sind. Dies vereinfacht die Montage.

Gemäß einer weiteren beispielhaften Ausgestaltung koppeln die beiden Befestigungsabschnitte an zwei voneinander abgewandten Seiten jeweils an einen Betätigungsschenkel benachbarter Abschirmelemente an, wobei die Verbindungsschenkel über zumindest ein Scharnier, insbesondere ein Filmscharnier, schwenkbar zwischen den Abschirmelementen gehalten sind.

Auch Filmscharniere können integral mittels Spritzguss gefertigt werden, wenn die Verbindungselemente als Spritzguss-Teile erzeugt werden. Die Verbindungselemente können in einem flachen (entfalteten) Zustand mittels Spritzguss erzeugt werden, bei dem die Befestigungsabschnitte und die Verbindungsschenkel im Wesentlichen parallel zueinander orientiert sind. Auf diese Weise kann eine vergleichsweise einfache Form (Auf-Zu-Werkzeug) genutzt werden.

Die Scharniere erlauben die gewünschte Bewegung/Verformung der Verbindungselemente. Bei der Nutzung von Filmscharnieren sind die Scharniere wesentlich dünner als die Verbindungsschenkel und die Befestigungsabschnitte. Dies betrifft zum einen die für die Montage erforderliche Gestalt (gefalteter Zustand). Zum anderen betrifft dies die erforderliche Deformation bei der Bewegung der Schutzabdeckung, wenn sich der Abstand zwischen den benachbarten Betätigungsschenkeln der Abschirmelemente verändert.

Gemäß einer weiteren beispielhaften Ausgestaltung sind die Betätigungsschenkel von drei oder mehr benachbarten Abschirmelementen über miteinander verkettete Verbindungselemente gekoppelt, wobei zumindest zwei der Verbindungselemente einen ersten Befestigungsabschnitt und einen zweiten Befestigungsabschnitt aufweisen. Auf diese Weise lässt sich eine Kette bilden, in dem ein jeweils erster Befestigungsabschnitt und ein jeweils zweiter Befestigungsabschnitt an zwei voneinander abgewandten Seiten eines Betätigungsschenkels an diesen ankoppeln.

Gemäß einer weiteren beispielhaften Ausgestaltung ist bei den zumindest zwei Verbindungselementen der jeweils erste Befestigungsabschnitt unter Zwischenschaltung eines Betätigungsschenkels mit einem zweiten Befestigungsabschnitt eines benachbarten Verbindungselements gekoppelt. Diese Reihung kann beliebig erweitert werden. Randseitige Verbindungselemente einer Schutzabdeckung können gegebenenfalls anders gestaltet sein.

Gemäß einer weiteren beispielhaften Ausgestaltung bildet der Befestigungsvorsprung eine über das zweite Verbindungselement hervorstehende Befestigungsöse aus, in die ein Halteelement einführbar ist. Auf diese Weise kann durch ein separates Halteelement eine Lagesicherung/Verriegelung des montierten Zustands herbeigeführt werden. Es ergibt sich eine zumindest teilweise formschlüssige Lagesicherung. Aus Sicht des ersten Verbindungselements, an dem der Befestigungsvorsprung gebildet ist, sitzt das Halteelement im Rücken des zweiten Verbindungselements in dem Bereich, in dem der Befestigungsvorsprung das zweite Verbindungselement überragt.

Die Befestigungsöse wird nicht durch ein separates Teil gebildet, sondern über ein integrales Gestaltelement des ersten Verbindungselements. Der Befestigungsvorsprung ist einstückig mit dem ersten Verbindungselement gestaltet, insbesondere mittels Spritzguss.

Gemäß einer weiteren beispielhaften Ausgestaltung ist das Halteelement ein Haltestift, der die Befestigungsöse des ersten Verbindungselements durchragt und sich am zweiten Verbindungselement abstützt. Auf diese Weise verhindert das Halteelement, dass der Befestigungsvorsprung wieder aus der Befestigungsaussparung herausrückt.

Bei dem Haltestift handelt sich beispielsweise um einen Stahlstift. Der Haltestift kann grundsätzlich einfach gestaltet sein, also ohne Kopf, Kragen oder Bund. Es versteht sich, dass stirnseitige Enden des Haltestifts gerundet oder gefast sein können. In beispielhaften Ausgestaltungen besteht der Haltestift aus einem Federstahl. Dies vereinfacht die Montage, weil auf diese Weise etwaige Verformungen bei der Montage durch die hohe Elastizität kompensiert werden. Das Halteelement ist stabförmig gestaltet.

Gemäß einer weiteren beispielhaften Ausgestaltung erstreckt sich das insbesondere als Haltestift gestaltete Halteelement durch eine Mehrzahl von Befestigungsösen, die durch eine Mehrzahl von Befestigungsvorsprüngen gebildet sind. Zu diesem Zweck sind die Befestigungsvorsprünge des Verbindungselements fluchtend miteinander ausgerichtet, sodass sich fluchtende Befestigungsösen ergeben. Das Halteelement kann eingefädelt werden.

Auf diese Weise können ähnlich wie bei einem Klavierband eine Mehrzahl von Befestigungsaussparungen mit einer Mehrzahl von Befestigungsvorsprüngen dauerhaft und sicher verbunden werden, um die beiden Verbindungselemente am Betätigungsschenkel zu montieren.

In beispielhaften Ausgestaltungen sind zwei oder mehr Befestigungsvorsprünge und zwei oder mehr damit korrespondierende Befestigungsaussparungen an den Verbindungselementen ausgebildet. In beispielhaften Ausgestaltungen sind drei oder mehr Befestigungsvorsprünge und drei oder mehr damit korrespondierende Befestigungsaussparungen an den Verbindungselementen ausgebildet. In beispielhaften Ausgestaltungen sind vier oder mehr Befestigungsvorsprünge und vier oder mehr damit korrespondierende Befestigungsaussparungen an den Verbindungselementen ausgebildet. Das Halteelement kann jeweils sämtliche der Befestigungsvorsprünge durchragen, die im Rücken der Befestigungsaussparungen eines benachbarten Verbindungselements miteinander fluchtende Befestigungsösen ausbilden.

Es ist auch vorstellbar, zwei Reihen aus jeweils zwei oder mehr benachbarten Befestigungsvorsprüngen sowie zwei Reihen aus jeweils zwei oder mehr benachbarten Befestigungsaussparungen bei einem Verbindungselement vorzusehen. Dies ist beispielsweise bei den als Längsstabilisatoren genutzten Verbindungselementen vorstellbar. Jede der Reihen kann wie gehabt zumindest drei oder zumindest vier Befestigungsaussparungen/Befestigungsvorsprünge aufweisen.

Gemäß einer weiteren beispielhaften Ausgestaltung weist das Halteelement eine Haupterstreckungsrichtung auf, die im montierten Zustand des Halteelements parallel zum Betätigungsschenkel orientiert ist. Das Halteelement erstreckt sich also nicht (wie ein Niet) orthogonal durch den Betätigungsschenkel hindurch. Stattdessen liegt das Halteelement parallel zum Betätigungsschenkel an einem Verbindungselement an (bzw. in einer dort gebildeten Führungsnut) und sichert die Befestigungsvorsprünge in ihrer die Befestigungsaussparungen durchragenden Position.

Gemäß einer weiteren beispielhaften Ausgestaltung weist das zweite Verbindungselement zumindest ein Lagesicherungselement auf, das den montierten Zustand des Halteelements sichert. Auf diese Weise soll insbesondere ein Verschieben aus der zumindest einen Befestigungsöse unterbunden werden. Mit anderen Worten soll das zumindest eine Lagesicherungselement eine axiale Bewegung des (stabförmigen) Halteelements begrenzen. Das zumindest eine Lagesicherungselement fluchtet mit der Befestigungsöse. Das zumindest eine Lagesicherungselement kann auch als Anschlag bezeichnet werden.

Gemäß einer weiteren beispielhaften Ausgestaltung weist das zweite Verbindungselement zwei Lagesicherungselemente auf, die voneinander beabstandet sind, wobei das Halteelement im montierten Zustand zwischen den beiden Lagesicherungselementen angeordnet ist und dabei die zumindest eine Befestigungsöse durchragt. Auf diese Weise ist das Halteelement in beiden Richtungen entlang seiner axialen Erstreckung gesichert. Umgekehrt ist eine Montage/ein Einführen des Halteelements von jeder Seite möglich.

Gemäß einer weiteren beispielhaften Ausgestaltung ist das zumindest eine Lagesicherungselement ein Vorsprung am zweiten Verbindungselement, der mit der Befestigungsöse und dem montierten Halteelement fluchtet. Das zumindest eine Lagesicherungselement ist integral mit dem Verbindungselement gebildet. Bei der Spritzgussbasierten Fertigung kann das Lagesicherungselement einfach als Vorsprung gebildet werden.

Gemäß einer weiteren beispielhaften Ausgestaltung überwindet das Halteelement bei der Montage das zumindest eine Lagesicherungselement unter elastischer Verformung. Dies umfasst auch eine teilweise elastische Verformung. Die elastische Verformung kann beispielsweise das Verbindungselement mit dem Lagesicherungselement betreffen. Die elastische Verformung kann auch das Halteelement selbst betreffen. Wenn das Halteelement unter definierter elastischer Verformung montierbar ist, und dann im montierten Zustand eine Entlastung gegeben ist, ergibt sich eine zusätzliche Lagesicherung. Der Bewegungsfreiheitsgrad, der die Montage erlaubt, ist dann im montierten Zustand zunächst gesperrt.

Gemäß einem weiteren Aspekt bezieht sich die vorliegende Offenbarung auf ein Verbindungselement zur Verbindung benachbarter Abschirmelemente einer längenveränderlichen Schutzabdeckung, das Folgendes aufweist:
- zwei Befestigungsabschnitte,
- zumindest zwei Verbindungsschenkel, die sich zwischen den Befestigungsabschnitten erstrecken,
- zumindest einen Befestigungsvorsprung, der am ersten Befestigungsabschnitt gebildet ist, und
- zumindest eine Befestigungsaussparung, die am zweiten Befestigungsabschnitt gebildet ist,
wobei der zumindest eine Befestigungsvorsprung dazu ausgebildet ist, die zumindest eine Befestigungsaussparung eines zweiten Verbindungselements und eine Öffnung eines dazwischen angeordneten Betätigungsschenkels eines Abschirmelements zu Befestigungszwecken zu durchragen.

Auch auf diese Weise wird die der Offenbarung zugrunde liegende Aufgabe gelöst.

Im montierten Zustand des Verbindungselements ist der zumindest eine Befestigungsvorsprung vom zweiten Befestigungsabschnitt abgewandt. Mehrere solcher Verbindungselemente können unter Zwischenschaltung eines Betätigungsschenkels aneinandergereiht werden, um eine Schutzabdeckung zu erzeugen.

Gemäß einer beispielhaften Ausgestaltung des Verbindungselements ist der zumindest eine Befestigungsvorsprung dazu ausgebildet, im montierten Zustand eine über das zweite Verbindungselement hervorstehende Befestigungsöse auszubilden, in die ein Halteelement einführbar ist.

Gemäß einer weiteren beispielhaften Ausgestaltung des Verbindungselements sind die zumindest zwei Verbindungsschenkel und die zwei Befestigungsabschnitte mit dem zumindest einen Befestigungsvorsprung und der zumindest einen Befestigungsaussparung gemeinsam integral hergestellt sind, insbesondere mittels Spritzguss auf Basis eines mittels Spritzguss verarbeitbaren Kunststoffmaterials. Die Verformbarkeit des Verbindungselements kann sich beispielsweise durch das Einbringen von Filmscharnieren ergeben. Diese können ebenso integral erzeugt werden.

Eine Mehrzahl solcher Verbindungselemente kann zur Erzeugung/Montage einer Schutzabdeckung gemäß einer der hierin beschriebenen Ausgestaltungen dienen.

Gemäß einem weiteren Aspekt bezieht sich die vorliegende Offenbarung auf ein Montagewerkzeug zur Montage zumindest zweier Verbindungselemente gemäß einer der hierin beschriebenen Ausgestaltungen zur Verbindung benachbarter Abschirmelemente einer Schutzabdeckung, wobei das Montagewerkzeug Folgendes aufweist:
- ein erstes Maulteil, das an den ersten Befestigungsabschnitt mit dem zumindest einen Befestigungsvorsprung angepasst ist,
- ein zweites Maulteil, das an den zweiten Befestigungsabschnitt mit der zumindest einen Befestigungsaussparung angepasst ist,
   wobei das erste Maulteil und das zweite Maulteil miteinander gelenkig gekoppelt und zwischen einer Eingriffsstellung und einer Außereingriffsstellung verlagerbar sind, und
   wobei das erste Maulteil und das zweite Maulteil in der Eingriffsstellung den ersten Befestigungsabschnitt eines ersten Verbindungselements und den zweiten Befestigungsabschnitt eines zweiten Verbindungselements unter Zwischenschaltung eines Betätigungsschenkels eines Abschirmelements gegeneinander drücken, sodass der zumindest eine Befestigungsvorsprung in die zumindest eine Befestigungsaussparung einrückt und diese durchragt.

Das erste Maulteil und das zweite Maulteil sind derart an den ersten Befestigungsabschnitt und den zweiten Befestigungsabschnitt angepasst, dass unter Nutzung des Montagewerkzeugs die beiden Befestigungsabschnitte benachbarter Verbindungselemente unter Zwischenschaltung des Betätigungsschenkels fest zusammengedrückt werden können, sodass die Befestigungsvorsprünge ihre Zielposition (Montageposition) erreichen.

Dies kann bereits eine Verrastung der Befestigungsvorsprünge in den Befestigungsaussparungen umfassen. Zusätzlich oder alternativ kann auf diese Weise auf der Rückseite des zweiten Befestigungsabschnitts eine Befestigungsöse für ein Halteelement ausgebildet werden.

Gemäß einer beispielhaften Ausgestaltung des Montagewerkzeugs ist im ersten Maulteil ein Einführkanal gebildet, durch den ein insbesondere als Haltestift gestaltetes Halteelement zuführbar und in der Eingriffsstellung der beiden Maulteile in eine durch den zumindest einen Befestigungsvorsprung gebildete Befestigungsöse einführbar ist, sodass das Halteelement den montierten Zustand der Verbindungselemente unter Zwischenschaltung des Betätigungsschenkels sichert. Auf diese Weise kann die Montageposition verriegelt und gesichert werden.

Es versteht sich, dass eine Montage grundsätzlich auch ohne ein solches Montagewerkzeug denkbar ist. Das Montagewerkzeug kann jedoch den Montagevorgang deutlich vereinfachen und beschleunigen.

Die Offenbarung bezieht sich ferner auf die Verwendung zumindest eines Verbindungselements gemäß zumindest einer der hierin beschriebenen Ausgestaltungen zur Verbindung zweier benachbarter Abschirmelemente einer Schutzabdeckung, wobei das Verbindungselement zwischen zwei benachbarten Betätigungsschenkeln der Abschirmelemente angeordnet wird und bei einem ersten Betätigungsschenkel mit zumindest einem Befestigungsvorsprung den Betätigungsschenkel und eine Befestigungsaussparung eines dahinter angeordneten Verbindungselements durchragt, und wobei das Verbindungselement im Bereich seiner Befestigungsaussparung bei einem zweiten Betätigungsschenkel von einem Befestigungsvorsprung eines dahinter angeordneten Verbindungselements durchragt wird.

Zur Lagesicherung kann jeweils ein Halteelement dienen, das in eine sich ergebende Befestigungsöse eingeführt wird. Eine Lagesicherung kann sich auch durch eine Verrastung der Befestigungsvorsprünge in den Befestigungsaussparungen ergeben, beispielsweise durch Rastnasen und dergleichen, die an den Befestigungsvorsprüngen ausgebildet sind.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Offenbarung zu verlassen.

Weitere Merkmale und Vorteile der Erfindung ergeben sich aus der nachfolgenden Beschreibung und Erläuterung mehrerer beispielhafter Ausführungsformen unter Bezugnahme auf die Zeichnungen. Es zeigen:
- Fig. 1:: eine schematische Vorderansicht einer Schutzbaugruppe mit Schutzabdeckungen für zwei lineare Achsen;
- Fig. 2:: eine schematische rückwärtige Ansicht einer Schutzabdeckung in einer teilweise ausgefahrenen (expandierten) Stellung;
- Fig. 3:: eine vergrößerte Teilansicht der Schutzabdeckung gemäß Fig. 2 mit Verbindungselementen unterschiedlichen Typs zur Verbindung der Betätigungsschenkel benachbarter Abschirmelemente;
- Fig. 4:: eine perspektivische Detailansicht auf Basis von Fig. 3 zur Veranschaulichung einer beispielhaften Gestaltung von miteinander gekoppelten Verbindungselementen;
- Fig. 5:: eine perspektivische Ansicht eines in Fig. 4 gefaltet gezeigten Verbindungselements in flacher Gestalt;
- Fig. 6:: eine weitere perspektivische Ansicht der in Fig. 5 rückwärtigen Seite des Verbindungselements;
- Fig. 7:: eine perspektivische Ansicht des in den Figuren 5 und 6 gezeigten Verbindungselements in einem gefalteten/verformten Zustand mitsamt einem Halteelement, das zur Lagesicherung nutzbar ist;
- Fig. 8:: eine geschnittene Teilansicht entlang der Längserstreckung eines Halteelements durch einen Kopplungsbereich zwischen zwei Verbindungselementen;
- Fig. 9:: eine perspektivische Teilansicht auf die Anordnung gemäß Fig. 8;
- Fig. 10:: eine weitere perspektivische Detailansicht auf Basis von Fig. 3 zur Veranschaulichung einer weiteren beispielhaften Ausgestaltung von miteinander gekoppelten Verbindungselementen;
- Fig. 11:: eine auf Fig. 10 basierende vereinfachte Ansicht eines Abschirmelements mit einem Betätigungsschenkel mit einer Mehrzahl von Öffnungen zur Ankopplung zweier Verbindungselemente;
- Fig. 12:: geschnittene Teilansichten senkrecht zur Längserstreckung eines Halteelements zur Veranschaulichung einer teilweise ineinander verschachtelten Blockstellung zweier Verbindungselemente;
- Fig. 13:: eine perspektivische Ansicht eines Montagewerkzeugs zur Montage zweier Verbindungselemente, in einer Außereingriffsstellung;
- Fig. 14:: eine geschnittene perspektivische Ansicht auf Basis von Fig. 13 in einer Eingriffsstellung des Montagewerkzeugs; und
- Fig. 15:: eine vergrößerte geschnittene Ansicht auf Basis von Fig. 14 zur Veranschaulichung der Montage eines Halteelements.

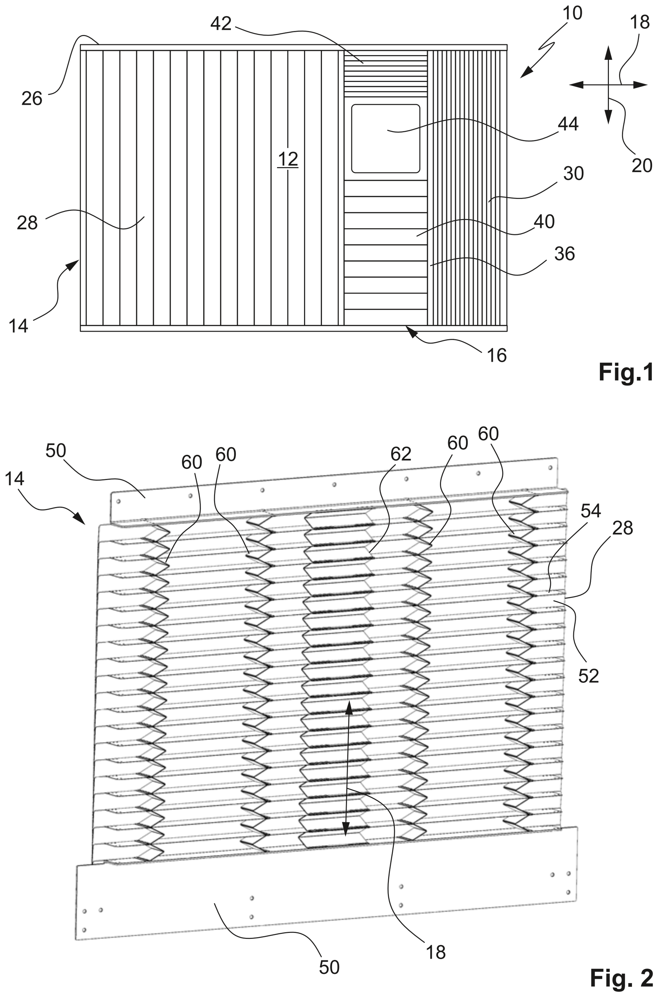

Fig. 1 veranschaulicht anhand einer schematischen Vorderansicht eine beispielhafte Ausgestaltung einer Schutzbaugruppe 10. Die Schutzbaugruppe 10 definiert eine Abschirmfläche 12, bei der durch die Schutzbaugruppe 10 eine Trennung zwischen zwei Seiten bereitgestellt ist, die vor und hinter der Abschirmfläche 12 angeordnet sind.

Im Ausführungsbeispiel ist die Schutzbaugruppe 10 durch zwei Schutzabdeckungen 14, 16 gebildet. Es versteht sich, dass die Schutzabdeckungen 14, 16 auch in Alleinstellung verwendbar sind. Es sind auch Schutzbaugruppen bekannt, die drei Schutzabdeckungen miteinander kombinieren.

Die Schutzabdeckung 14 ist zur Bewegung in einer ersten Verfahrrichtung (vergleiche Achse 18) befähigt. Die Schutzabdeckung 16 ist zur Bewegung in einer zweiten Verfahrrichtung (vergleiche Achse 20) befähigt, sodass insgesamt eine zweidimensionale Bewegung entlang der Abschirmfläche 12 darstellbar ist. Auf diese Weise können beispielsweise eine horizontale Achse 18 und eine vertikale Achse 20 bereitgestellt werden. Dies ist nicht einschränkend zu verstehen.

Die Schutzabdeckung 14 umfasst im Ausführungsbeispiel einen Außenrahmen 26, an dem zwei Pakete von Abschirmelementen 28, 30 gelagert und geführt sind. Die Schutzabdeckung 16 umfasst im Ausführungsbeispiel einen Innenrahmen 36, an dem zwei Pakete von Abschirmelementen 40, 42 gelagert und geführt sind. Die Schutzabdeckung 16 mit dem Innenrahmen 36 sitzt zwischen den Abschirmelementen 28 und den Abschirmelementen 30 der Schutzabdeckung 14. Mit anderen Worten wird bei einer Bewegung der Schutzabdeckung 14 entlang der Achse 18 die Schutzabdeckung 16 zwischen den Abschirmelementen 28 und 30 mitbewegt.

Bei einer Bewegung der Abschirmelemente 28, 30 entlang der Achse 18 werden das erste Paket 28 und das zweite Paket 30 jeweils wechselseitig gestaucht (komprimiert) oder auseinandergezogen (expandiert). Dasselbe gilt für die beiden Pakete von Abschirmelementen 40, 42 bei einer Bewegung entlang der Achse 20.

Zwischen den Abschirmelementen 40, 42 sitzt im Ausführungsbeispiel eine Öffnung 44, die entlang der ersten Achse 18 und entlang der zweiten Achse 20 verfahrbar ist. Bei einer Verwendung der Schutzbaugruppe 10 bei einer Werkzeugmaschine kann beispielsweise eine Werkzeugspindelbaugruppe (in Fig. 1 nicht gezeigt) die Öffnung 44 durchragen. Wenn eine solche Baugruppe oder eine vergleichbare Komponente zu Bearbeitungszwecken oder Handhabungszwecken bewegt wird, ermöglicht die Schutzbaugruppe 10 aufgrund ihrer Verfahrbarkeit eine "Mitnahme" der Abschirmelemente 28, 30 und 40, 42 und damit eine Beibehaltung der Abdichtung und Abschirmung entlang der Abschirmfläche 12. Es sind auch andere Anwendungen für Schutzabdeckungen als solche bei Werkzeugmaschinen bekannt. Eine Schutzabdeckung muss nicht notwendigerweise zwei einander gegenüberliegende Pakete von Abschirmelementen umfassen.

Nachfolgend werden anhand schematischer Detailansichten der Schutzabdeckung 14 offenbarungsgemäße Merkmale und Ausgestaltungen veranschaulicht. Es versteht sich, dass auch die in Fig. 1 gezeigte Schutzabdeckung 16 entsprechend gestaltet sein kann.

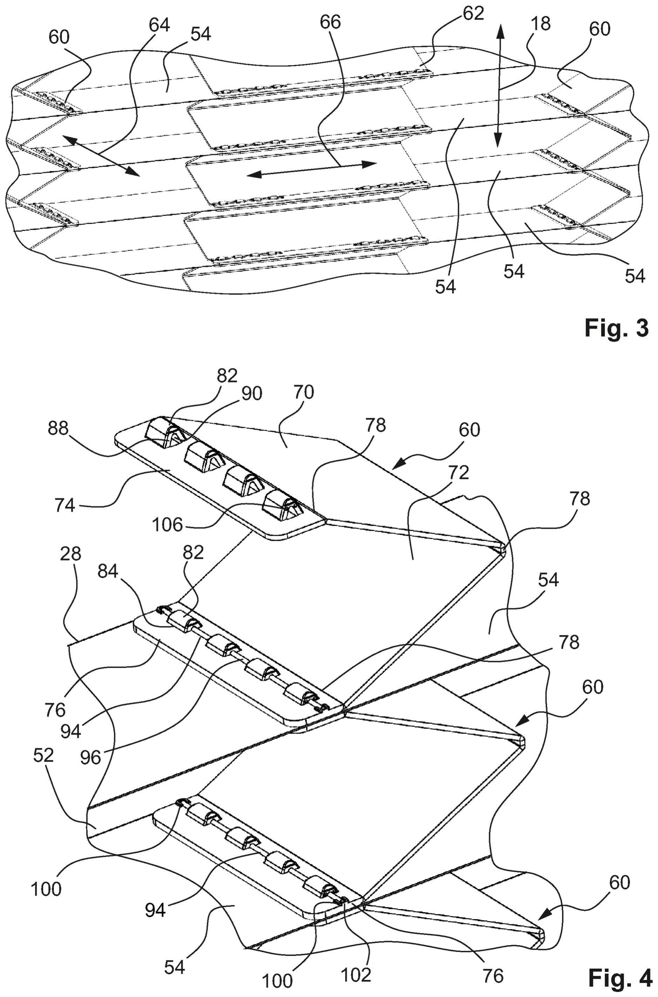

Fig. 2 zeigt eine rückwärtige Ansicht der Schutzabdeckung 14 in einer ausgefahrenen Stellung. Die rückwärtige Ansicht gemäß Fig. 2 ergibt sich beispielsweise bei Betrachtung der Schutzbaugruppe 10 gemäß Fig. 1 von hinten (Bereich hinter der dortigen Abschirmfläche 12). Fig. 3 zeigt einen vergrößerten Ausschnitt der Anordnung gemäß Fig. 2.

Im Ausführungsbeispiel weist die Schutzabdeckung 14 eine Mehrzahl von Abschirmelementen 28 auf, die in einer Reihe nebeneinander und teilweise überlappend angeordnet sind. Am Anfang und am Ende der Reihe sitzen jeweils Endflansche 50. Die Endflansche 50 können zur gestellseitigen/rahmenseitigen Ankopplung der Schutzabdeckung 14 dienen. Ferner können über die Endflansche 50 Betätigungskräfte zur Bewegung der Schutzabdeckung 14 eingeleitet werden. Beispielsweise ist ein erster Endflansch 50 gestellfest und ein zweiter Endflansch 50 entlang der Achse 18 relativ zum ersten Endflansch 50 verfahrbar angeordnet. Bei einer Kombination mehrerer Schutzabdeckungen 14, 16 (vergleiche Fig. 1) kann zumindest eine der Schutzabdeckungen 14, 16 mit ihren Flanschen fliegend oder schwimmend gelagert sein. Das ist dann der Fall, wenn der Rahmen 36 einer Schutzabdeckung 16 insgesamt bei der Bewegung der anderen Schutzabdeckung 14 mitbewegt wird.

Die Abschirmelemente 28 weisen jeweils einen Abdeckschenkel 52 und einen Betätigungsschenkel 54 auf. Die Abdeckschenkel 52 bilden gemeinsam die Abschirmfläche 12 (vergleiche auch Fig. 1). Die Abschirmelemente 28 einer Schutzabdeckung 14 sind üblicherweise gleichartig und zumindest teilweise identisch gestaltet. Dies schließt nicht aus, dass äußere der Abschirmelemente 28, die beispielsweise mit einem Endflansch 50 gekoppelt sind, abweichend gestaltet sind.

Der Abdeckschenkel 52 und der Betätigungsschenkel 54 eines Abschirmelements 28 sind üblicherweise im Wesentlichen L-förmig zueinander orientiert. Im Ausführungsbeispiel weisen die Betätigungsschenkel 54 eine im Wesentlichen flache und geradlinige Erstreckung auf. Im Ausführungsbeispiel sind die Abdeckschenkel 52 zumindest abschnittsweise profiliert. Auf diese Weise kann die Dichtwirkung der Schutzabdeckung 14 bei der Abschirmfläche 12 erhöht werden, wenn einander überlappende Abdeckschenkel 52 benachbarter Abschirmelemente 28 einander definiert und gegebenenfalls mit Vorspannung kontaktieren.

Die Betätigungsschenkel 54 der Abschirmelemente 28 dienen zur Aufnahme von Verbindungselementen 60, 62, die die Abschirmelemente 28 miteinander koppeln und in ihrer Lage zueinander stabilisieren. Die Figuren 2 und 4 veranschaulichen einen ersten Typ von Verbindungselementen 60 und einen zweiten Typ von Verbindungselementen 62, die miteinander kombiniert werden, um benachbarte Abschirmelemente 28 miteinander zu koppeln. Die Verbindungselemente 60, 62 sind üblicherweise aus (gegebenenfalls faserverstärkten) Kunststoffwerkstoffen gefertigt, beispielsweise mittels Spritzgießen.

Die Verbindungselemente 60, 62 können auch als Stabilisatoren bezeichnet werden. Die Verbindungselemente 60, 62 sind über Filmscharniere oder anderweitig gestaltete Gelenke definiert verformbar, wenn sich die Schutzabdeckung 14 bewegt und damit benachbarte Abschirmelemente 28 relativ zueinander bewegt werden.

Die Verbindungselemente 60, 62 sind im Ausführungsbeispiel gemäß den Figuren 2 und 3 etwa dachförmig gestaltet, ähnlich einem Satteldach, wobei die Dachneigung in Abhängigkeit von einem Abstand zwischen zwei benachbarten Betätigungsschenkeln 54 veränderlich ist. Ein maximal denkbarer Abstand zwischen zwei benachbarten Betätigungsschenkeln 54 entspricht im Ausführungsbeispiel einer flachen Dachneigung. Es versteht sich, dass auch andere Gestaltungen der Verbindungselemente 60, 62 grundsätzlich denkbar sind.

Die Verbindungselemente 60 stabilisieren benachbarte Abschirmelemente 28 in einer Richtung (vergleiche den Doppelpfeil 64 in Fig. 3) quer zur Abschirmfläche 12. Die Verbindungselemente 60 können daher auch als Querstabilisatoren bezeichnet werden. Die Verbindungselemente 62 stabilisieren benachbarte Abschirmelemente 28 in einer Richtung (vergleiche den Doppelpfeil 66) in einer Richtung längs zur Abschirmfläche 12 und orthogonal zur Verfahrrichtung (Achse 18). Die Verbindungselemente 62 können auch als Längsstabilisatoren bezeichnet werden.

Bei den Verbindungselemente 60, 62 handelt es sich jeweils um Gelencketten, wobei etwaige Drehgelenke/Schwenkgelenke im Ausführungsbeispiel durch Filmscharniere gebildet sind. Die Verbindungselemente 60, 62 sind im Ausführungsbeispiel jeweils einstückig gestaltet und definiert (gelenkig) verformbar. Bei der Fertigung mittels Spritzguss können verschiedenen Gestaltelemente vergleichsweise einfach in die Verbindungselemente 60, 62 integriert werden. Dies kann zur Vereinfachung der Montage der Schutzabdeckung 14 genutzt werden, wenn eine Mehrzahl oder Vielzahl von Abschirmelementen 28 unter Verwendung einer entsprechenden Anzahl von Verbindungselementen 60, 62 miteinander gekoppelt wird.

In dem in Fig. 2 gezeigten Ausführungsbeispiel sind jeweils zwei benachbarte Abschirmelemente durch ein (mittig angeordnetes) Verbindungselement 62 und vier Verbindungselemente 60 miteinander gekoppelt. Jeweils zwei der Verbindungselemente 60 sitzen entlang der Längserstreckung des Abschirmelements 28 vor und hinter dem Verbindungselement 62. Das in Fig. 2 gezeigte Layout ist nicht einschränkend zu verstehen. Je nach den gewünschten Abmessungen der Schutzabdeckung 14 und den funktionalen Anforderungen an die Schutzabdeckung 14 können auch mehr oder weniger Verbindungselemente 60, 62 verbaut sein.

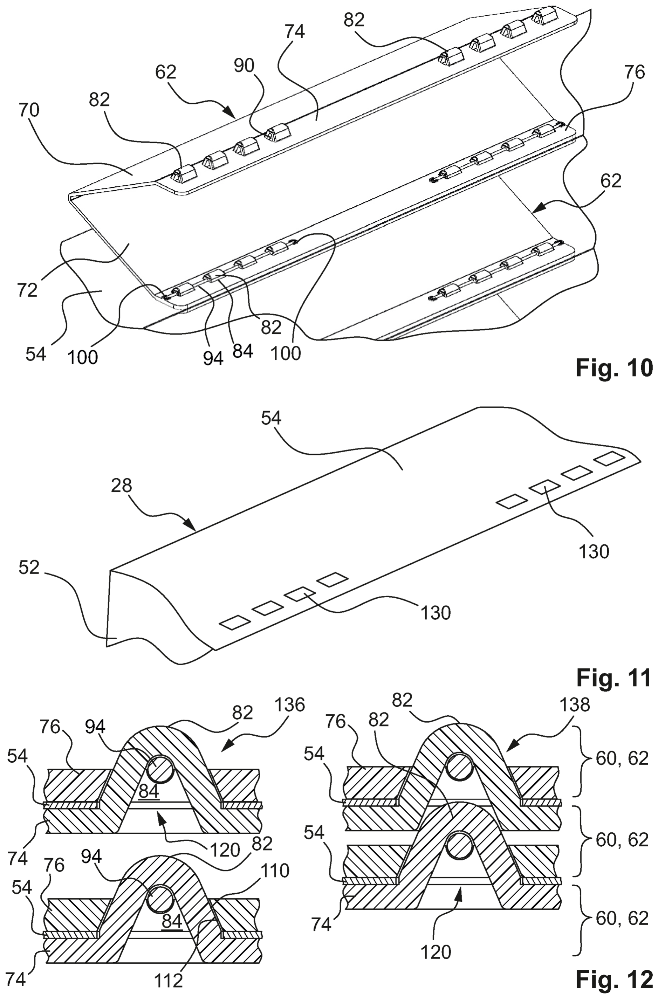

Nachfolgend werden mit Bezugnahme auf die Figuren 4-12 eine beispielhafte Ausgestaltung sowie ein Ansatz zur Montage der Verbindungselemente 60, 62 veranschaulicht und näher erläutert. Die Figuren 4-9 beziehen sich auf die Verbindungselemente 60, wobei dies nicht einschränkend zu verstehen ist. Die Erläuterungen gelten auch für die Verbindungselemente 62, die beispielsweise in Fig. 10 gezeigt sind.

Die in Fig. 4 gezeigten Verbindungselemente 60 sind nach Art einer Kette miteinander gekoppelt, wobei jeweils ein Betätigungsschenkel 54 eines Abschirmelements 28 zwischen zwei benachbarten Verbindungselementen 60 angeordnet ist.

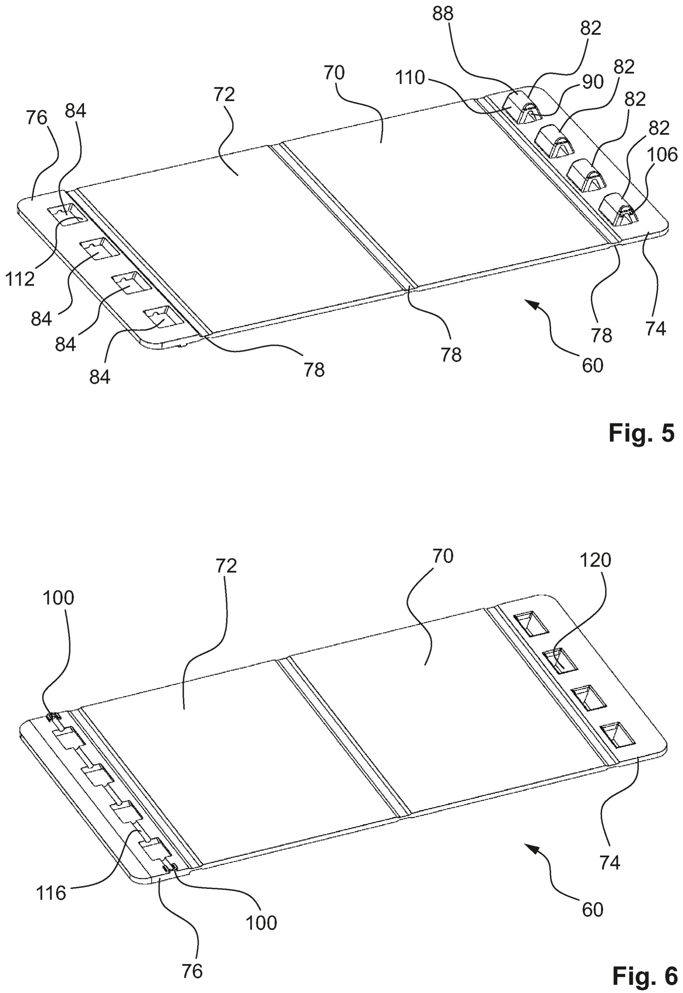

Die Figuren 5 und 6 veranschaulichen einen flachen Zustand eines Verbindungselements 60, beispielsweise unmittelbar nach der Fertigung mittels Spritzguss. Folglich sind die Verbindungselemente 60 im Ausführungsbeispiel aus einem mittels Spritzguss verarbeitbaren Thermoplast-Werkstoff hergestellt. Der Werkstoff ist bedarfsweise faserverstärkt.

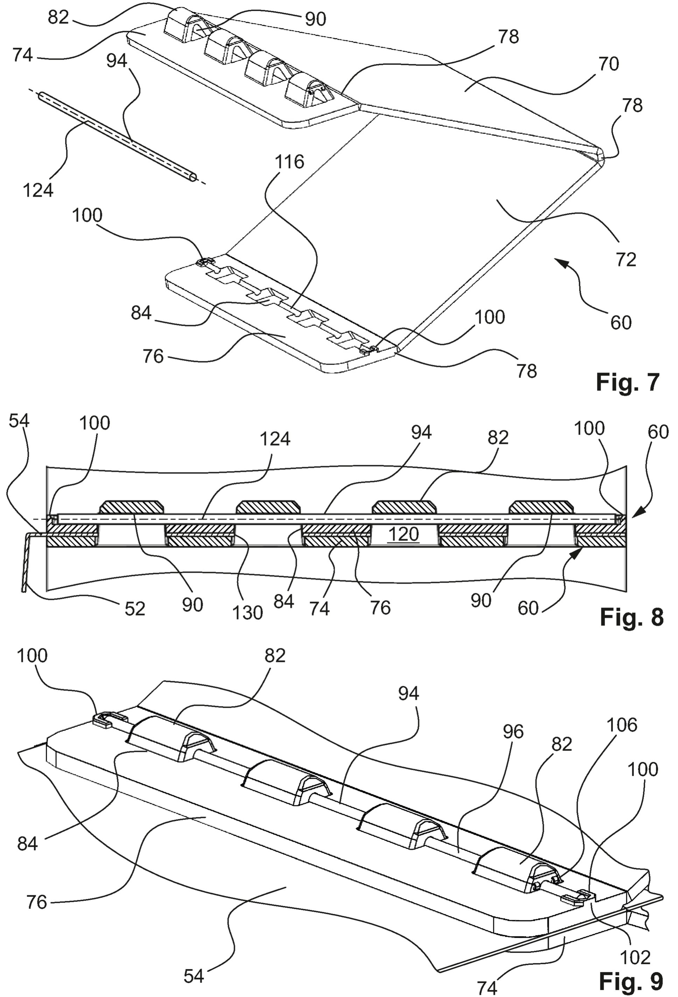

Fig. 7 zeigt auf Basis der Figuren 5 und 6 eine gefaltete Gestalt, den die Verbindungselemente 60 im montierten Zustand (Fig. 4) zumindest näherungsweise einnehmen. Die Verbindungselemente 60 verändern ihre Gestalt bei der Bewegung der Schutzabdeckung 14. Die Verbindungselemente 60 sind deformierbar.

Im Ausführungsbeispiel weisen die Verbindungselemente 60 jeweils zwei Verbindungsschenkel 70, 72 auf, die sich zwischen den hier randseitigen Befestigungsabschnitten 74, 76 erstrecken. Zwischen den beiden Verbindungsschenkeln 70, 72 ist ein Scharnier 78 ausgebildet, sodass die Verbindungsschenkel 70, 72 relativ zueinander verschwenkbar sind. Gleichermaßen ist zwischen dem Verbindungsschenkel 70 und dem Befestigungsabschnitt 74 ein Scharnier 78 ausgebildet. Gleichermaßen ist zwischen dem Verbindungsschenkel 72 und dem Befestigungsabschnitt 76 ein Scharnier 78 ausgebildet. Die Scharniere 78 können etwa als Filmscharniere gefertigt sein, also als integral gestaltete Gelenke. Zwischen den Verbindungsschenkeln 70, 72 und den jeweils benachbarten Befestigungsabschnitten 74, 76 ist ebenso eine Schwenkbewegung ermöglicht. Auch die Verbindungselemente 62 (vergleiche Fig. 10) können entsprechend mit Verbindungsschenkeln 70, 72 sowie Befestigungsabschnitten 74, 76 gestaltet sein.

Beim Befestigungsabschnitt 74 sind Befestigungsvorsprünge 82 ausgebildet. Beim Befestigungsabschnitt 76 sind Befestigungsaussparungen 84 ausgebildet, deren Anzahl und Form an die Befestigungsvorsprünge 82 angepasst ist, vergleiche insbesondere die Figuren 5-7.

Mit den Befestigungsabschnitten 74, 76 kontaktieren die Verbindungselemente 60 die Betätigungsschenkel 54. Ein Betätigungsschenkel 54 ist jeweils zwischen zwei benachbarten Verbindungselementen 60 angeordnet. Ein Verbindungselement 60 ist jeweils zwischen zwei benachbarten Betätigungsschenkeln 54 angeordnet. Befestigungsvorsprünge 82 und Befestigungsaussparungen 84 benachbarter Verbindungselemente 60 sind miteinander ausgerichtet, um eine Kopplung zu ermöglichen.

Im montierten Zustand erstrecken sich die Befestigungsvorsprünge 82 in die Befestigungsaussparungen 84 des benachbarten Verbindungselement 60 hinein. Im Ausführungsbeispiel sind die Befestigungsvorsprünge 82 jeweils als Bogen 88 gestaltet, der sich vom Befestigungsabschnitt 74 erhebt. Der Bogen 88 ragt im montierten Zustand teilweise über den Befestigungsabschnitt 76 des benachbarten Verbindungselements 60 hinaus. Die Befestigungsvorsprünge 82 bilden folglich Befestigungsösen 90 hinter dem benachbarten Befestigungsabschnitt 76 aus. Dort kann eine Lagesicherung zur Verriegelung des montierten Zustands erfolgen.

Im Ausführungsbeispiel gemäß den Figuren 4-9 weisen die Verbindungselemente 60 an den voneinander abgewandten Befestigungsabschnitten 74, 76 vier Befestigungsvorsprünge 82 und vier Befestigungsaussparungen 84 auf, die mit korrespondierenden Elementen benachbarter Verbindungselemente 60 zusammenwirken. Es versteht sich, dass auch eine von vier abweichende Anzahl verbaut sein kann.

Die Figuren 4, 8 und 9 zeigen den montierten Zustand, in dem ein Halteelement 94 durch die Befestigungsösen 90 hindurchgeführt wird. Auf diese Weise werden die Befestigungsvorsprünge 82 in den Befestigungsaussparung 84 gesichert. Der montierte Zustand ist damit verriegelt.

Die Halteelemente 94 sind beispielsweise als Haltestift 96 gestaltet. Die Verbindungselemente 60 sind im Ausführungsbeispiel aus Kunststoff hergestellt, insbesondere mittels Spritzguss. Die Abschirmelemente 28 mit dem Betätigungsschenkel 54 sind insbesondere aus Stahlblech gebildet, beispielweise aus Federstahlblech. Die Halteelemente 94 sind beispielsweise Stahlstifte, insbesondere aus Federstahl.

Der montierte Zustand des Halteelements 94 kann durch Lagesicherungselemente 100 gegen ein unerwünschtes Lösen des Halteelements 94 gesichert werden. Fig. 9 zeigt, dass im Ausführungsbeispiel zwei Lagesicherungselemente 100 verbaut sind, zwischen denen das Halteelement 94 angeordnet ist. Die Lagesicherungselemente 100 sind beispielsweise als Vorsprünge 102 gestaltet, die sich am Befestigungsabschnitt 76 erheben. Die Lagesicherungselemente 100 können folglich als integrale Bestandteile der Verbindungselemente 60 gestaltet sein.

Die Figuren 4, 5 und 9 veranschaulichen ferner eine Gestaltung, bei der zumindest einige der Befestigungsvorsprünge 82 mit Rastnasen 106 bestückt sind, die die dafür sorgen, dass die Befestigungsvorsprünge 82 in ihrer in die Befestigungsaussparungen 84 eingerückten Stellung verrasten können. Auf diese Weise kann sich eine zumindest temporäre Lagesicherung zwischen zwei benachbarten Verbindungselementen 60 ergeben. In beispielhaften Ausgestaltungen vereinfachen die Rastnasen 106 die anschließende Montage des Halteelements 94. Es sind grundsätzlich auch Ausgestaltungen vorstellbar, bei denen die Rastnasen 106 für eine vollständige und dauerhafte Lagesicherung der Befestigungsvorsprünge 82 in ihrer in die Befestigungsaussparungen 84 eingerückten Stellung sorgen. In einem solchen Fall ist ein zusätzliches Halteelement 94 nicht unbedingt erforderlich.

Fig. 5 veranschaulicht, dass die Befestigungsvorsprünge 82 im Ausführungsbeispiel geneigte Seitenwände 110 aufweisen. Ein Querschnitt der Befestigungsvorsprünge 82 ist demgemäß (umgedreht) U-förmig oder V-förmig, vergleiche auch Fig. 12. Die Befestigungsaussparungen 84 weisen entsprechend geneigte Seitenflächen 112 auf, die an die geneigten Seitenwände 110 angepasst sind. Auf diese Weise vereinfacht sich das Einführen der Befestigungsvorsprünge 82 in die Befestigungsaussparungen 84. Gleichermaßen ergibt sich im eingerückten Zustand ein günstiger Kontakt (Flächenkontakt) zwischen den Befestigungsvorsprüngen 82 und den Befestigungsaussparungen 84 benachbarter Verbindungselemente 60.

Ausweislich der Figuren 6 und 7 ist im Ausführungsbeispiel im Befestigungsabschnitt 76 eine Führungsnut 116 ausgebildet, die den Befestigungsaussparungen 84 zugeordnet ist. Die Führungsnut 116 stellt einen Sitz für das Halteelement 94 bereit. Die Führungsnut 116 erstreckt sich im Ausführungsbeispiel zwischen den beiden voneinander abgewandten Lagesicherungselementen 100.

In den vergrößerten Darstellungen gemäß Fig. 8 in Fig. 9 sitzt das Halteelement 94 in der Führungsnut 116, weshalb die Führungsnut 116 in den Figuren 8 und 9 nicht sichtbar ist. Die Führungsnut 116 ist an das Halteelement 94, insbesondere an dessen Durchmesser, angepasst. Ähnliches gilt für die durch die Befestigungsvorsprünge 82 bereitgestellten Befestigungsösen 90. Auf diese Weise ergibt sich ein günstiger Kontakt zwischen dem Halteelement 94 und den Verbindungselementen 60, eine übermäßige Belastung des Kunststoffmaterials mit hohen lokalen Lastspitzen wird vermieden. Auf diese Weise kann ein unerwünschtes Kriechen vermieden werden.

In den Figuren 6 und 8 sind ferner mit 120 Eintauchöffnungen auf der Rückseite/Unterseite der hier als Bogen 88 gestalteten Befestigungsvorsprünge 82 bezeichnet. Die Eintauchöffnungen 120 erlauben ein zumindest abschnittsweises Einrücken der Spitze eines Befestigungsvorsprungs 82 eines benachbarten Verbindungselements 60. Dies wird weiter unten in Zusammenhang mit Fig. 12 weiter erläutert.

In Fig. 7 ist das Halteelement 94 in einem nicht montierten Zustand gezeigt. Das Halteelement 94 erstreckt sich stabförmig entlang einer Haupterstreckungsrichtung 124. Die Hauptstreckungsrichtung 124 fluchtet im montierten Zustand mit den Befestigungsösen 90 und den Lagesicherungselementen 100, vergleiche Fig. 8 und Fig. 9.

Die geschnittene Teilansicht gemäß Fig. 8 veranschaulicht, dass sich die Befestigungsvorsprünge 82 ausgehend vom Befestigungsabschnitt 74 durch Öffnungen 130 im Betätigungsschenkel 54 und die Befestigungsaussparungen 84 im Befestigungsabschnitt 76 eines benachbarten Verbindungselements 60 erstrecken. Zur Lagesicherung ist das Halteelement 94 in die Befestigungsösen 90 eingeführt.

Die in den Figuren 4-9 gezeigte Ausgestaltung der Verbindungselemente 60 eignet sich auch für Abschirmelemente 28 mit Betätigungsschenkeln 54, deren Breite in einer Richtung (vergleiche den Doppelpfeil 64 in Fig. 3) quer zur Abschirmfläche 12 kleiner als eine mögliche Überlappungslänge der Verbindungselemente 60 ist. Bezugnehmend auf die Figuren 4, 8 und 9 würden bei einer solchen Gestaltung bei einem "kurzen" Betätigungsschenkel 54 beispielsweise nur zwei der vier Befestigungsvorsprünge 82 Öffnungen im Betätigungsschenkel 54 durchragen, um zwei benachbarte Verbindungselemente 60 am Betätigungsschenkel 54 zu befestigen. Ein Abschnitt der Verbindungselemente 60 würde dann über den Betätigungsschenkel 54 überstehen. Die beiden übrigen Befestigungsvorsprünge 82 können weiterhin jeweils eine Befestigungsaussparung 84 durchragen, jedoch ohne sich dabei durch den Betätigungsschenkel 54 zu erstrecken. Damit wären nur zwei der vier Paarungen aus Befestigungsvorsprünge 82 und Befestigungsaussparungen 84 "belegt".

Es versteht sich, dass die genannten Zahlen und Verhältnisse (zwei von vier Paarungen) lediglich exemplarischer Natur sind. Allgemein gilt, dass sich nicht notwendigerweise jeder Befestigungsvorsprung 82 zwingend durch eine Öffnung im Betätigungsschenkel erstrecken muss. Die Verbindungselemente 60 können über die Betätigungsschenkel 54 überstehen. Auch mit einer solchen Gestaltung können benachbarte Abschirmelemente 28 sicher und dauerhaft miteinander gekoppelt werden.

Ergänzend zu den Figuren 4-9 veranschaulichen die Figuren 10 und 11 eine grundsätzlich ähnliche Gestaltung bei den Verbindungselementen 62 zur Verbindung benachbarter Betätigungsschenkel 54. Die Verbindungselemente 62 weisen Verbindungsschenkel 70, 72 sowie Befestigungsabschnitte 74, 76 auf. Bei den Befestigungsabschnitten 74 sind Befestigungsvorsprünge 82 ausgebildet. Bei den Befestigungsabschnitten 76 sind Befestigungsaussparungen 84 ausgebildet. Die Befestigungsvorsprünge 82 können in Befestigungsaussparungen 84 eines benachbarten Verbindungselements 62 einrücken, wobei dazwischen ein Betätigungsschenkel 54 des Abschirmelements 28 angeordnet ist. Fig. 11 zeigt das Abschirmelement 28, in dessen Betätigungsschenkel 54 eine Mehrzahl von Öffnungen 130 eingebracht ist. Die Befestigungsvorsprünge 82 werden bei der Montage durch die Öffnungen 130 gesteckt.

In den Figuren 10 und 11 weisen die Verbindungselemente 62 bei den Befestigungsabschnitten 74 jeweils zwei in einer Längsrichtung zueinander versetzte Reihen aus jeweils vier Befestigungsvorsprüngen 82 und bei den Befestigungsabschnitten 76 jeweils zwei in einer Längsrichtung zueinander versetzte Reihen aus jeweils vier Befestigungsaussparungen 84 auf. Andere Gestaltungen sind denkbar. Es versteht sich, dass alternativ zur unterschiedlichen Gestaltung der Verbindungselemente 60, 62 auch eine gleichartige oder gar identische Gestaltung den Verbindungselementen 60, 62 zugrunde gelegt werden kann. Die Verbindungselemente 60, 62 würden sich dann im Wesentlichen durch Ihre Funktion und Orientierung (Querstabilisatoren und Längsstabilisatoren) in montierter Stellung an den Betätigungsschenkeln 54 unterscheiden.

Fig. 12 veranschaulicht die Funktion der zuvor bereits in Zusammenhang mit den Figuren 6 und 8 genannten Eintauchöffnung 120 an der Unterseite der Befestigungsvorsprünge 82 der Verbindungselemente 60, 62. Mit 136 ist eine Anordnung bezeichnet, bei der benachbarte Betätigungsschenkel 54 zumindest etwas voneinander beabstandet sind, die Schutzabdeckung 14 ist zumindest teilweise ausgefahren. Mit 138 ist eine Anordnung bezeichnet, bei der die Schutzabdeckung 14 vollständig eingefahren ist (Blockmaß oder Blockstellung).

In der Blockstellung sind benachbarte Betätigungsschenkel 54 so nahe wie möglich aneinander herangefahren. Die Eintauchöffnungen 120 an der Unterseite der Befestigungsvorsprünge 82 stellen einen Raum bereit, in den ein benachbarter Befestigungsvorsprung 82 zumindest teilweise einfahren kann, wenn sich die Schutzabdeckung 14 in der Blockstellung befindet. Auf diese Weise kann der Mindestabstand zwischen benachbarten Betätigungsschenkeln 54 minimiert werden, auch wenn zumindest die Befestigungsvorsprünge 82 prominent über den jeweiligen Befestigungsabschnitt 74 hervorstehen.

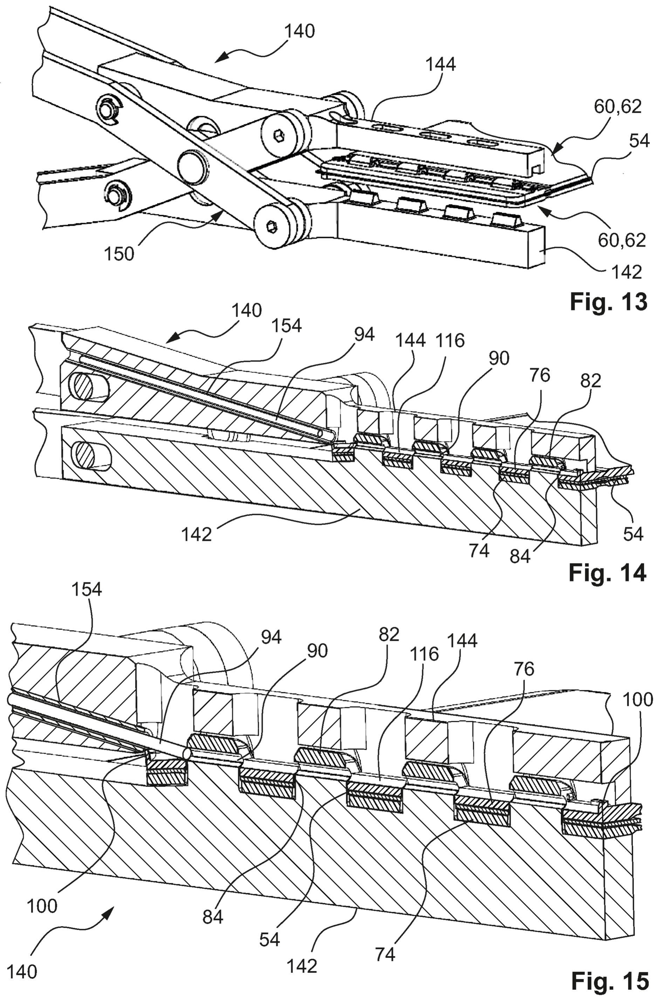

Mit Bezugnahme auf die Figuren 13-15 wird eine beispielhafte Ausgestaltung eines Montagewerkzeugs 140 zur Montage zweier benachbarter Verbindungselemente 60, 62 unter Zwischenschaltung eines Betätigungsschenkels 54 veranschaulicht.

Das Montagewerkzeug 140 ist zangenartig gestaltet. Das Montagewerkzeug 140 weist ein erstes Maulteil 142 und ein zweites Maulteil 144 auf. Die Maulteile 142, 144 sind in Fig. 13 in einer (voneinander beabstandeten) Außereingriffsstellung gezeigt. Die Maulteile 142, 144 sind in den Figuren 14 und 15 in einer (aneinander angenäherten) Eingriffsstellung gezeigt. Die Bewegung der Maulteile 142, 144 zwischen der Außereingriffsstellung und der Eingriffsstellung erfolgt hier unter Nutzung eines Gelenksmechanismus 150. Das erste Maulteil 142 ist an den Befestigungsabschnitt 74 eines ersten Verbindungselementes 60, 62 angepasst. Das zweite Maulteil 144 ist an den Befestigungsabschnitt 76 eines zweiten Verbindungselementes 60, 62 angepasst.

Wenn die beiden Maulteile 142, 144 in die Eingriffsstellung gebracht werden, werden die beiden Befestigungsabschnitte 74, 76 benachbarter Verbindungselemente 60, 62 gegeneinander gedrückt, sodass die Befestigungsvorsprünge 82 in die Befestigungsaussparungen 84 einrücken und in einer finalen Montageposition über diese hervorstehen. Auf diese Weise werden im Ausführungsbeispiel mehrere miteinander fluchtende Befestigungsösen 90 zwischen den Befestigungsvorsprüngen 82 des ersten Verbindungselementes 60, 62 und dem Befestigungsabschnitt 76 des zweiten Verbindungselementes 60, 62 bereitgestellt.

In der in den Figuren 14 und 15 gezeigten Eingriffsstellung kann ferner über einen Einführkanal 154 das Halteelement 94 in die Befestigungsösen 90 sowie - sofern vorhanden - die beim Befestigungsabschnitt 76 gebildete Führungsnut 116 eingeführt ("eingefädelt") werden. Dies kann unter Nutzung einer (temporären) elastischen Verformung erfolgen. Die Verformung kann beim Halteelement 94 selbst auftreten. Die temporäre Verformung kann jedoch auch bei den Verbindungselementen 60, 62 und gegebenenfalls sogar bei dem Betätigungsschenkel 54 auftreten.

Im Ausführungsbeispiel gemäß Fig. 15 drängt das Montagewerkzeug 140 mit dem zweiten Maulteil 144 den Befestigungsabschnitt 76 und dort insbesondere das Lagesicherungselement 100 zumindest zeitweise beiseite, sodass das Halteelement 94 über den Einführkanal 154 in die Befestigungsösen 90 und die Führungsnut 116 eingeführt werden kann.

Das Montagewerkzeug 140 kann die Befestigung der Verbindungselemente 60, 62 an den Abschirmelementen 28 der Schutzabdeckung 14 erleichtern. Auf diese Weise vereinfachen sich die Montage und etwaige Reparaturen im Feld. Es versteht sich, dass die Montage der Verbindungselemente 60, 62 auch mit anderen Werkzeugen/Hilfsmitteln vonstattengehen können.

## Patentansprüche

1. Längenveränderliche Schutzabdeckung (12, 14) mit einer Mehrzahl von miteinander gekoppelten Abschirmelementen (28, 30; 40, 42), die relativ zueinander beweglich sind und jeweils einen Abdeckschenkel (52) und einen gegenüber dem Abdeckschenkel (52) abgewinkelten Betätigungsschenkel (54) aufweisen,
wobei die Betätigungsschenkel (54) benachbarter Abschirmelemente (28, 30; 40, 42) durch zumindest ein verformbares Verbindungselement (60, 62) zumindest abschnittsweise miteinander gekoppelt sind,
wobei zumindest einer der Betätigungsschenkel (54) zwischen zwei Verbindungselementen (60, 62) angeordnet ist, die auf voreinander abgewandten Seiten an den Betätigungsschenkel (54) ankoppeln,
**dadurch gekennzeichnet, dass**
ein erstes der beiden Verbindungselemente (60, 62) einen Befestigungsvorsprung (82) aufweist, der eine Öffnung (130) im Betätigungsschenkel (54) und eine Befestigungsaussparung (84) des zweiten der beiden Verbindungselemente (60, 62) zu Befestigungszwecken durchragt.

2. Schutzabdeckung (12, 14) nach Anspruch 1,
**dadurch gekennzeichnet, dass**
der Befestigungsvorsprung (82) zumindest eine Rastnase (106) aufweist, die den Befestigungsvorsprung (82) in der Befestigungsaussparung (84) sichert, und/oder der Befestigungsvorsprung (82) als Bogen (88) oder Spitzbogen gestaltet ist, unter dem ein Halteelement (94) durchführbar ist.

3. Schutzabdeckung (12, 14) nach Anspruch 1 oder 2,
**dadurch gekennzeichnet, dass**
unterhalb des Befestigungsvorsprungs (82) eine Eintauchöffnung (120) gebildet ist, in die ein Befestigungsvorsprung (82) eines benachbarten Verbindungselements (60, 62) in einem Blockzustand der Schutzabdeckung (12, 14) zumindest teilweise eindringt, und/oder
das erste Verbindungselement (60, 62) eine Mehrzahl von Befestigungsvorsprüngen (82) aufweist, die in einer Reihe angeordnet sind, wobei das zweite Verbindungselement (60, 62) eine Mehrzahl von Befestigungsaussparungen (84) aufweist, die in einer Reihe angeordnet sind, und wobei die Befestigungsvorsprünge (82) den Betätigungsschenkel (54) und die Befestigungsaussparungen (84) durchragen.

4. Schutzabdeckung (12, 14) nach einem der Ansprüche 1-3,
**dadurch gekennzeichnet, dass**
zwischen zwei oder mehr benachbarten Befestigungsaussparungen (84) des zweiten Verbindungselements (60, 62) eine Führungsnut (116) für ein Halteelement (94) gebildet ist, und/oder
die Befestigungsaussparung (84) des zweiten Verbindungselements (60, 62) geneigte Seitenflächen (112) aufweist, die an den Befestigungsvorsprung (82) des ersten Verbindungselements (60, 62) angepasst sind.

5. Schutzabdeckung (12, 14) nach einem der Ansprüche 1-4,
**dadurch gekennzeichnet, dass**
die Verbindungselemente (60, 62) zwei Befestigungsabschnitte (74, 76) und zwei Verbindungsschenkel (70, 72) aufweisen, die sich zwischen den Befestigungsabschnitten (74, 76) erstrecken, wobei ein erster Befestigungsabschnitt (74) einen oder mehrere Befestigungsvorsprünge (82) aufweist, und wobei ein zweiter Befestigungsabschnitt (76) eine oder mehrere Befestigungsaussparungen (84) aufweist, wobei insbesondere die beiden Befestigungsabschnitte (74, 76) an zwei voneinander abgewandten Seiten jeweils an einen Betätigungsschenkel (54) benachbarter Abschirmelemente (28, 30; 40, 42) ankoppeln, und die Verbindungsschenkel (70, 72) über zumindest ein Scharnier (78), insbesondere ein Filmscharnier, schwenkbar zwischen den Abschirmelementen (28, 30; 40, 42) gehalten sind.

6. Schutzabdeckung (12, 14) nach Anspruch 5,
**dadurch gekennzeichnet, dass**
die Betätigungsschenkel (54) von drei oder mehr benachbarten Abschirmelementen (28, 30; 40, 42) über miteinander verkettete Verbindungselemente (60, 62) gekoppelt sind, und zumindest zwei der Verbindungselemente (60, 62) einen ersten Befestigungsabschnitt (74) und einen zweiten Befestigungsabschnitt (76) aufweisen,
wobei insbesondere bei den zumindest zwei Verbindungselementen (60, 62) der jeweils erste Befestigungsabschnitt (74) unter Zwischenschaltung eines Betätigungsschenkels (54) mit einem zweiten Befestigungsabschnitt (76) eines benachbarten Verbindungselements (60, 62) gekoppelt ist.

7. Schutzabdeckung (12, 14) nach einem der Ansprüche 1-6,
**dadurch gekennzeichnet, dass**
der Befestigungsvorsprung (82) eine über das zweite Verbindungselement (60, 62) hervorstehende Befestigungsöse (90) ausbildet, in die ein Halteelement (94) einführbar ist.

8. Schutzabdeckung (12, 14) nach Anspruch 7,
**dadurch gekennzeichnet, dass**
das Halteelement (94) ein Haltestift (96) ist, der die Befestigungsöse (90) des ersten Verbindungselements (60, 62) durchragt und sich am zweiten Verbindungselement (60, 62) abstützt, und/oder
sich das insbesondere als Haltestift (96) gestaltete Halteelement (94) durch eine Mehrzahl von Befestigungsösen (90) erstreckt, die durch eine Mehrzahl von Befestigungsvorsprüngen (82) gebildet sind, und/oder
das Halteelement (94) eine Haupterstreckungsrichtung (124) aufweist, die im montierten Zustand des Halteelements (94) parallel zum Betätigungsschenkel (54) orientiert ist.

9. Schutzabdeckung (12, 14) nach Anspruch 7 oder 8,
**dadurch gekennzeichnet, dass**
das zweite Verbindungselement (60, 62) zumindest ein Lagesicherungselement (100) aufweist, das den montierten Zustand des Halteelements (94) sichert.

10. Schutzabdeckung (12, 14) nach Anspruch 9,
**dadurch gekennzeichnet, dass**
das zweite Verbindungselement (60, 62) zwei Lagesicherungselemente (100) aufweist, die voneinander beabstandet sind, wobei das Halteelement (94) im montierten Zustand zwischen den beiden Lagesicherungselementen (100) angeordnet ist und dabei die zumindest eine Befestigungsöse (90) durchragt, und/oder das zumindest eine Lagesicherungselement (100) ein Vorsprung (102) am zweiten Verbindungselement (60, 62) ist, der mit der Befestigungsöse (90) und dem montierten Halteelement (94) fluchtet.

11. Schutzabdeckung (12, 14) nach Anspruch 9 oder 10,
**dadurch gekennzeichnet, dass**
das Halteelement (94) bei der Montage das zumindest eine Lagesicherungselement (100) unter elastischer Verformung überwindet,
wobei insbesondere ein aus dem ersten Befestigungsabschnitt (74) eines ersten Verbindungselements (60, 62) und dem zweiten Befestigungsabschnitt (76) eines zweiten Verbindungselements (60, 62) unter Zwischenschaltung eines Betätigungsschenkels (54) eines Abschirmelements (28, 30, 40, 42) gebildeter Stapel elastisch deformierbar ist, sodass das Halteelement (94) bei der Montage das zumindest eine Lagesicherungselement (100) überwindet.

12. Verbindungselement (60, 62) zur Verbindung benachbarter Abschirmelemente (28, 30; 40, 42) einer längenveränderlichen Schutzabdeckung (12, 14), insbesondere einer Schutzabdeckung (12, 14) nach einem der Ansprüche 1-11, das Folgendes aufweist:
- zwei Befestigungsabschnitte (74, 76), und
- zumindest zwei Verbindungsschenkel (70, 72), die sich zwischen den Befestigungsabschnitten (74, 76) erstrecken,
**gekennzeichnet durch**
- zumindest einen Befestigungsvorsprung (82), der am ersten Befestigungsabschnitt (74) gebildet ist, und
- zumindest eine Befestigungsaussparung (84), die am zweiten Befestigungsabschnitt (76) gebildet ist,
wobei der zumindest eine Befestigungsvorsprung (82) dazu ausgebildet ist, die zumindest eine Befestigungsaussparung (84) eines zweiten Verbindungselements (60, 62) und eine Öffnung (130) eines dazwischen angeordneten Betätigungsschenkels (54) eines Abschirmelements (28, 30; 40, 42) zu Befestigungszwecken zu durchragen.

13. Verbindungselement (60, 62) nach Anspruch 12,
**dadurch gekennzeichnet, dass**
der zumindest eine Befestigungsvorsprung (82) dazu ausgebildet ist, im montierten Zustand eine über das zweite Verbindungselement (60, 62) hervorstehende Befestigungsöse (90) auszubilden, in die ein Halteelement (94) einführbar ist, und/oder.
die zwei Verbindungsschenkel (70, 72) und die zwei Befestigungsabschnitte (74, 76) mit dem zumindest einen Befestigungsvorsprung (82) und der zumindest einen Befestigungsaussparung (84) gemeinsam integral hergestellt sind, insbesondere mittels Spritzguss auf Basis eines mittels Spritzguss verarbeitbaren Kunststoffmaterials.

14. Montagewerkzeug (140) zur Montage zumindest zweier Verbindungselemente (60, 62) nach Anspruch 12 oder 13 zur Verbindung benachbarter Abschirmelemente (28, 30; 40, 42) einer Schutzabdeckung (12, 14), das Folgendes aufweist:
- ein erstes Maulteil (142), das an den ersten Befestigungsabschnitt (74) mit dem zumindest einen Befestigungsvorsprung (82) angepasst ist,
- ein zweites Maulteil (144), das an den zweiten Befestigungsabschnitt (76) mit der zumindest einen Befestigungsaussparung (84) angepasst ist,
wobei das erste Maulteil (142) und das zweite Maulteil (144) miteinander gelenkig gekoppelt und zwischen einer Eingriffsstellung und einer Außereingriffsstellung verlagerbar sind,
**dadurch gekennzeichnet, dass**
das erste Maulteil (142) und das zweite Maulteil (144) in der Eingriffsstellung den ersten Befestigungsabschnitt (74) eines ersten Verbindungselements (60, 62) und den zweiten Befestigungsabschnitt (76) eines zweiten Verbindungselements (60, 62) unter Zwischenschaltung eines Betätigungsschenkels (54) eines Abschirmelements (28, 30; 40, 42) gegeneinander drücken, sodass der zumindest eine Befestigungsvorsprung (82) in die zumindest eine Befestigungsaussparung (84) einrückt und diese durchragt.

15. Montagewerkzeug (140) nach Anspruch 14,
**dadurch gekennzeichnet, dass** im ersten Maulteil (142) ein Einführkanal gebildet ist, durch den ein insbesondere als Haltestift (96) gestaltetes Halteelement (94) zuführbar und in der Eingriffsstellung der beiden Maulteile (142, 144) in eine durch den zumindest einen Befestigungsvorsprung (82) gebildete Befestigungsöse (90) einführbar ist, sodass das Halteelement (94) den montierten Zustand der Verbindungselemente (60, 62) unter Zwischenschaltung des Betätigungsschenkels (54) sichert.
